# EUROPEAN PATENT SPECIFICATION

(11) **EP 3 474 676 B1**
(45) Date of publication and mention of the grant of the patent: **22.07.2026**
(21) Application number: 17733467.9
(22) Date of filing: 28.06.2017
(51) Int. Cl.: A23J 1/20, A23C 9/154, A23C 13/14

(54) **CREAM WITH IMPROVED MOUTH FEEL, PROCESS OF MAKING IT AND USE FOR FOOD OR BEVERAGE PRODUCTION**
SAHNE MIT VERBESSERTEM MUNDGEFÜHL VERFAHREN IHRER HERSTELLUNG UND IHRE VERWENDUNG ZUR HERSTELLUNG VON LEBENSMITTELN ODER GETRÄNKEN
CRÈME AVEC UNE SENSATION BUCCALE AMÉLIORÉE, PROCÉDÉ DE SA PRODUCTION ET SON UTILISATION POUR LA FABRICATION DES ALIMENTS OU DES BOISSONS

(30) Priority: 28.06.2016 EP 16176757
(43) Date of publication of application: 01.05.2019
(73) Proprietor: Société des Produits Nestlé S.A., 1800 Vevey (CH)
(72) Inventor: DAIMER, Katharina, 3510 Freimittigen (CH); KREUSS, Markus, 3510 Freimittigen (CH); MARZORATTI, Mattia, 3006 Bern (CH)
(74) Representative: Györffy, Béla
(86) International application number: PCT/EP2017/065999
(87) International publication number: WO 2018/002142

(56) References cited:
- WO-A1-2015/197496
- US-A1- 2009 041 920
- US-A1- 2015 296 833
- DATABASE GNPD [online] MINTEL; 9 May 2016 (2016-05-09), "Liquid Light Cream", XP055716108, retrieved from www.gnpd.com Database accession no. 3985783
- TATERKA HEATHER ET AL: "The effect of whey protein denaturation on light backscatter and particle size of the casein micelle as a function of pH and heat-treatment temperature", INTERNATIONAL DAIRY JOURNAL, vol. 48, 10 February 2015 (2015-02-10), pages 53 - 59, XP029170279, ISSN: 0958-6946, DOI: 10.1016/J.IDAIRYJ.2015.01.017

## Description

### Field of the invention

The present invention relates to creams and methods of producing creams comprising protein aggregates which contribute to the improvement of creaminess, mouthfeel and texture.

### Background

Mouthfeel and creaminess, as well as reduction of fat, are key drivers of liking for milk based products such as cream and products derived from cream.

Today, there is a challenge to increase the mouthfeel/creaminess of present creams, in particular to achieve such increase in mouthfeel/creaminess using all-natural formulations or ideally by acting on the product matrix itself, instead of adding ingredients to the product. This is particularly true in low and no fat products.

It is known since 1980's that a slight pH adjustment of native fresh milk prior to heat treatment results in change of aggregation behavior between casein micelles and whey proteins. F. Guyomarc'h. 2006; Formation of heat-induced protein aggregates in milk as a means to recover the whey protein fraction in cheese manufacture, and potential of heat-treating milk at alkaline pH values in order to keep its rennet coagulation properties. A review, Lait, 86, 1-20, explored the effect of pH 6.3 on the formation of heat-induced aggregates in milk.

As described in US 2009/0041920, milk protein concentrate may be prepared by insolubilisation of milk proteins. Insolubilisation is achieved by aggregation of the whey protein and/or casein, by adjusting the milk protein concentrate to a pH of from 4.1 to 5.4, or from 4.3 to 5.3, preferably the isoelectric point of the milk protein concentrate. Thereafter, the pH-adjusted milk concentrate may be heat-treated and homogenised. This process results in a cream cheese product.

A recent article [T. Ozcan, Yogurt made from milk heated at different pH values, J. Dairy Sci. 98:1-10] investigated the effects of different pH values of milk at heating on the rheological properties of yogurt gels. Tested pH values were 6.2, 6.7 and 7.2. The study concluded that heating at the natural pH (6.7) resulted in yogurt with highest gel stiffness. The rheological measurements were carried out after incubation of the milk with the yogurt starter and at a pH of 4.6, so that those results are not as such applicable to infer the effect of pH at heating on the rheological properties of cream.

US 2015/0289538 relates to a method of producing a frozen confection product with improved freeze-thaw stability. In particular, the method comprises a post-pasteurisation acidification step. WO 2015/197496 relates to liquid dairy blends suitable for being used in the preparation of dairy-based culinary sauces or prepared culinary dishes comprising milk proteins and fat. The Milk proteins are whey protein and casein, with a ratio of whey protein : casein ranging from 0.3 to 0.5 and a pH ranging from 5.8 to 6.2.

Taterka and Castillo (International Dairy Journal 2015, 48:53-59) discusses the effect of whey protein denaturation on light backscatter and particle size of the casein micelle as a function of pH and heat-treatment temperature. This article discloses several pH and heat treatments of reconstituted skim milk.

Thickeners (hydrocolloids, starches, etc.) have been added to milk products, such as cream, to increase their viscosity. However this solution had several drawbacks such as unexpected texture change and flavor loss, increased length of ingredient list and also increased formulation costs. Thus it is an object of the present invention to improve mouthfeel, texture, thickness and/or creaminess of cream, particularly with lower or no fat. It is also an object of the present invention to keep mouthfeel, texture, thickness and/or creaminess of a cream constant while reducing fat content. Furthermore it is also an object of the present invention to keep mouthfeel, texture, thickness and/or creaminess of a cream constant while reducing thickening agents and/or stabilizers, e.g. hydrocolloids or starch.

### Summary of the invention

It was surprisingly found that by adjusting pH of a cream in the range of 5.7 to 6.4, followed by a UHT sterilization process carried out at a temperature of between 135 °C to 155 °C, the whey proteins form complexes with the casein micelles, which results in increased colloidal particle size and overall viscosity.

In a first aspect, the present invention relates to a cream according to claim 1.

In a second aspect, the present invention relates to a process for the preparation of a cream according to claim 4.

In a further aspect, the present invention relates to the use of a cream of the present invention to prepare a food or beverage product.

### Description of the figures

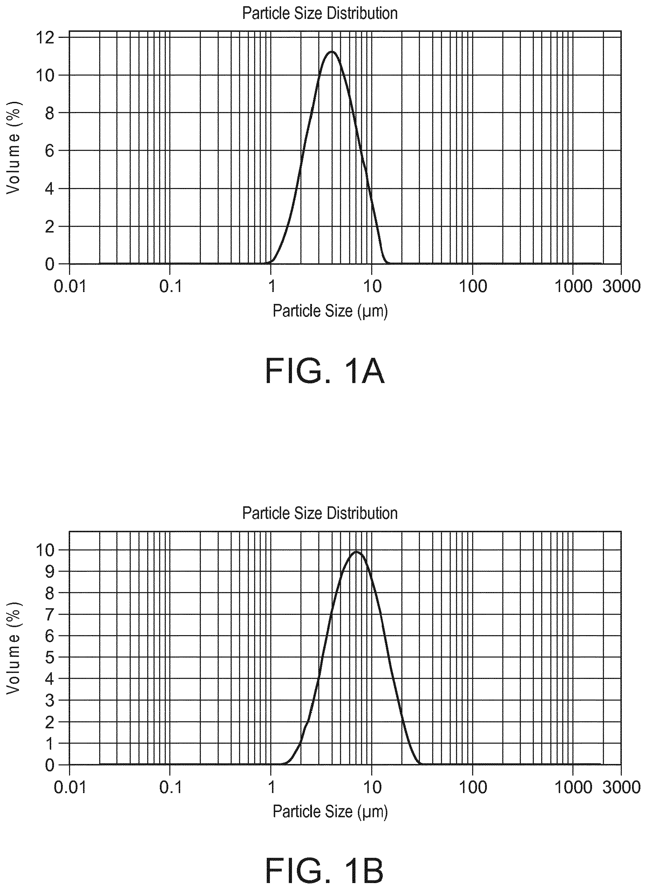

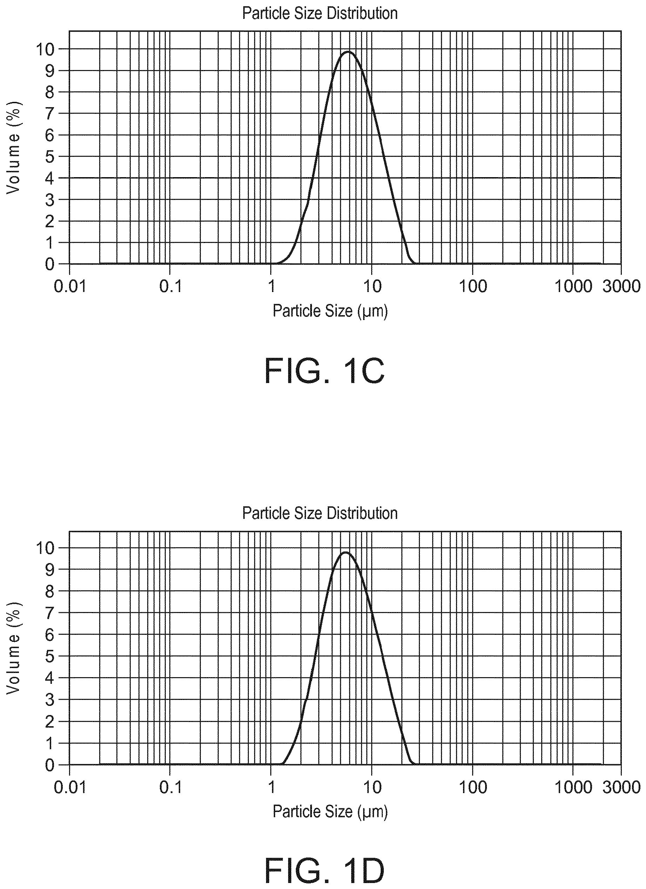

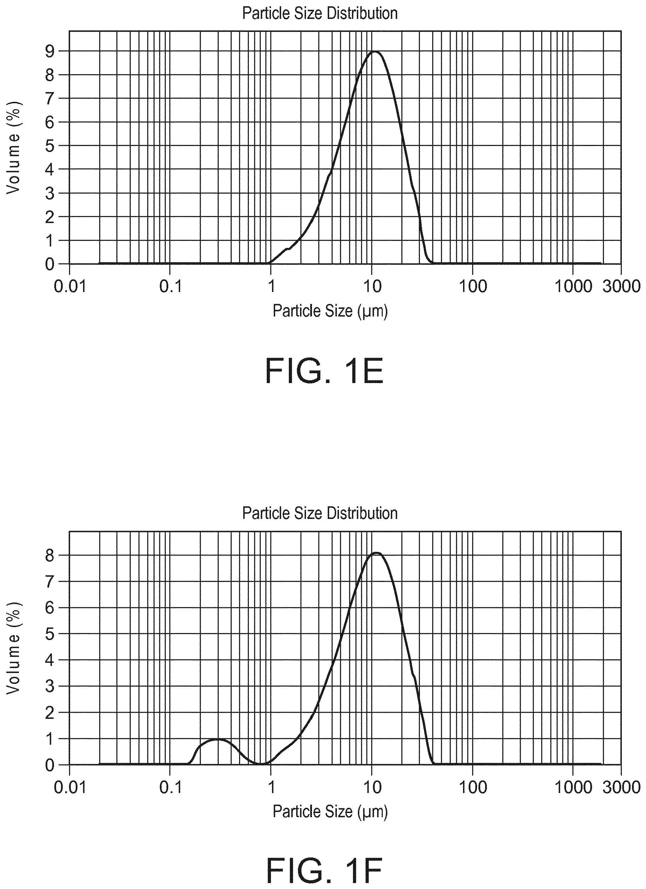

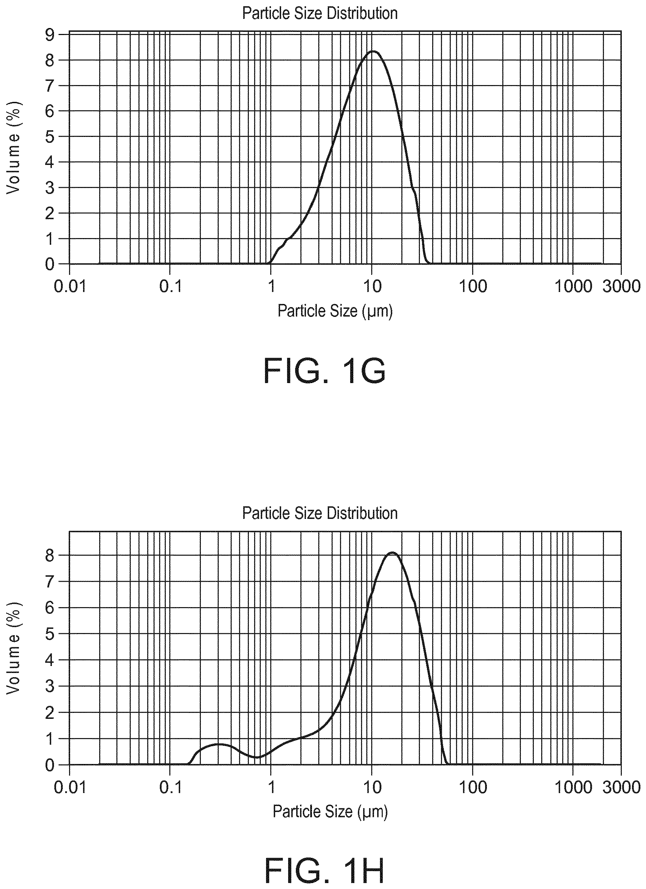

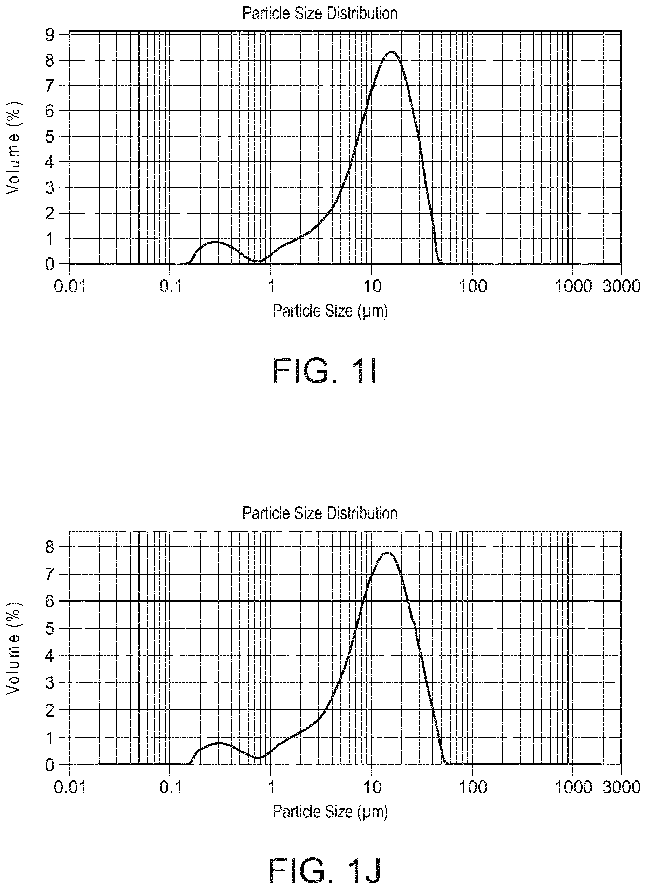

Figure 1 shows particle size distributions of low fat cream of Samples 1 to 9 of the invention and of Reference 1 (prior art): A: Reference 1 produced with no pH adjustment and UHT processed at 143°C for 8 seconds; B: Sample 1 produced with adjustment of the pH to 6.3 and UHT processed at 143°C for 8 seconds; C: Sample 2 produced with adjustment of the pH to 6.3 and UHT processed at 153°C for 8 seconds; D: Sample 3 produced with adjustment of the pH to 6.2 and UHT processed at 143°C for 8 seconds; E: Sample 4 produced with adjustment of the pH to 6.2 and UHT processed at 148°C for 8 seconds; F: Sample 5 produced with adjustment of the pH to pH 6.2 and UHT processed at 153°C for 8 seconds; G: Sample 6 produced with adjustment of the pH to 6 and UHT processed at 143°C for 8 seconds; H: Sample 7, produced with adjustment of the pH to 6 and UHT processed at 148°C for 8 seconds; I: Sample 8, produced with adjustment of the pH to 6 and UHT treated at 153°C for 8 seconds. All Samples of the present invention have a significantly larger particles than the prior art Reference.

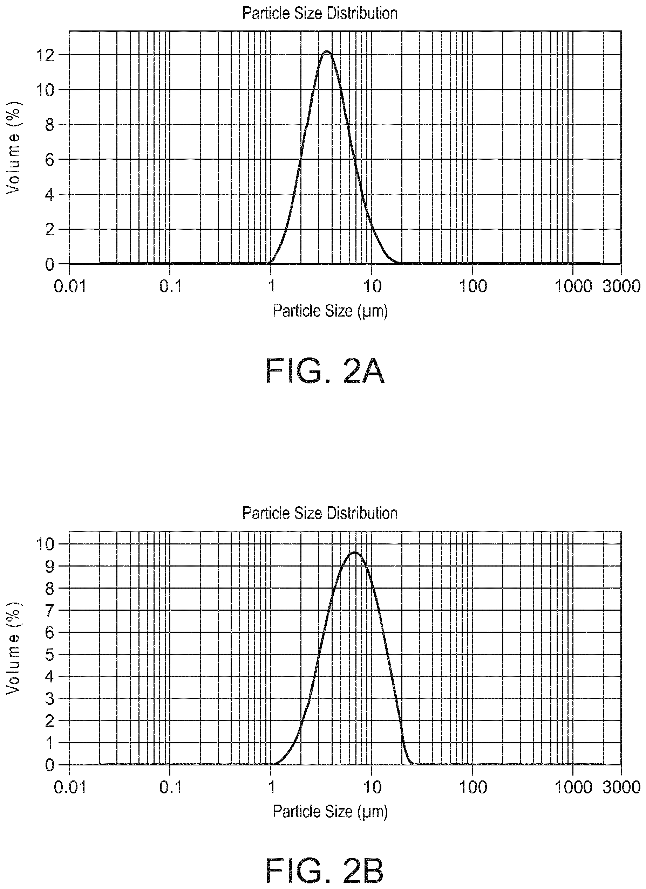

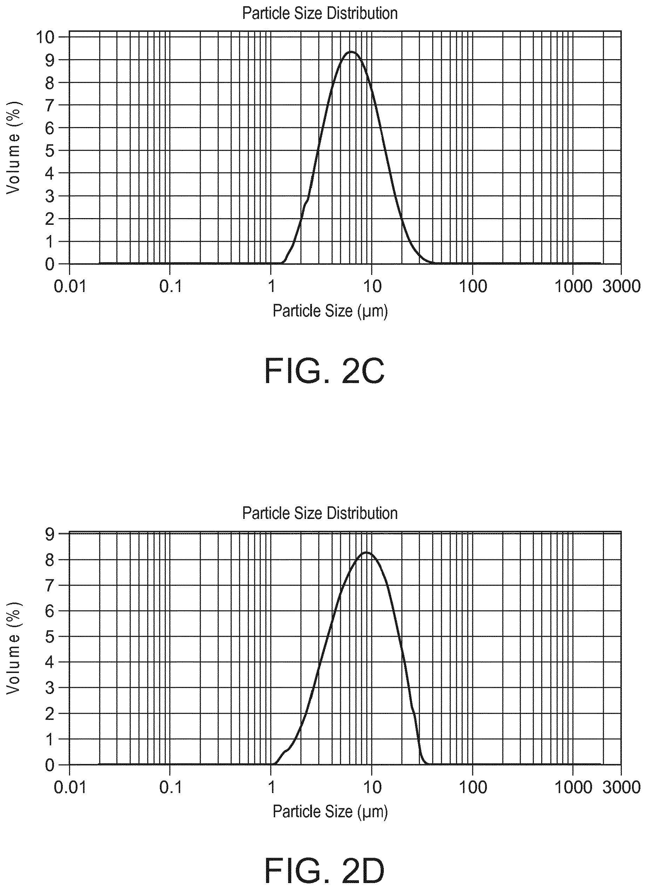

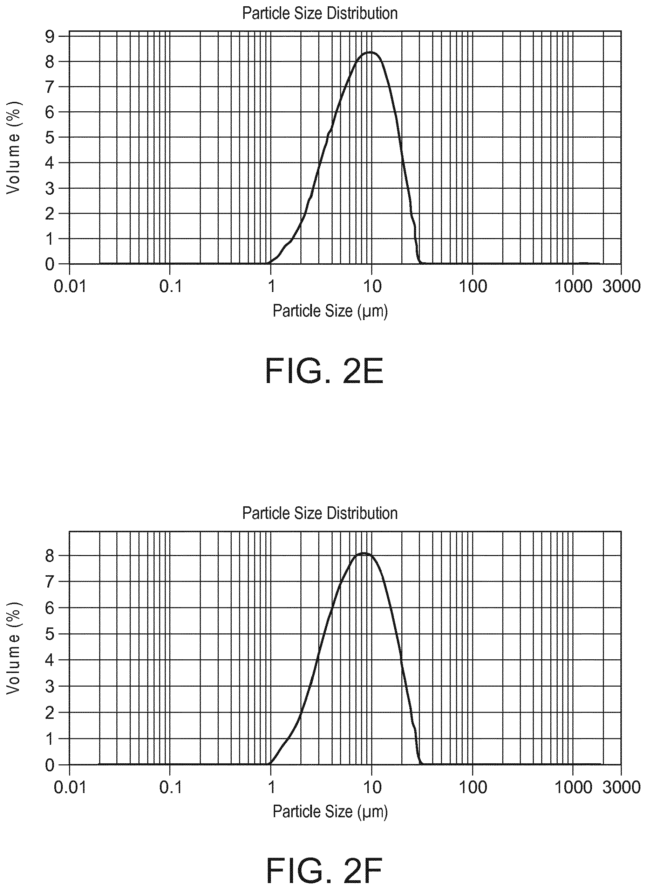

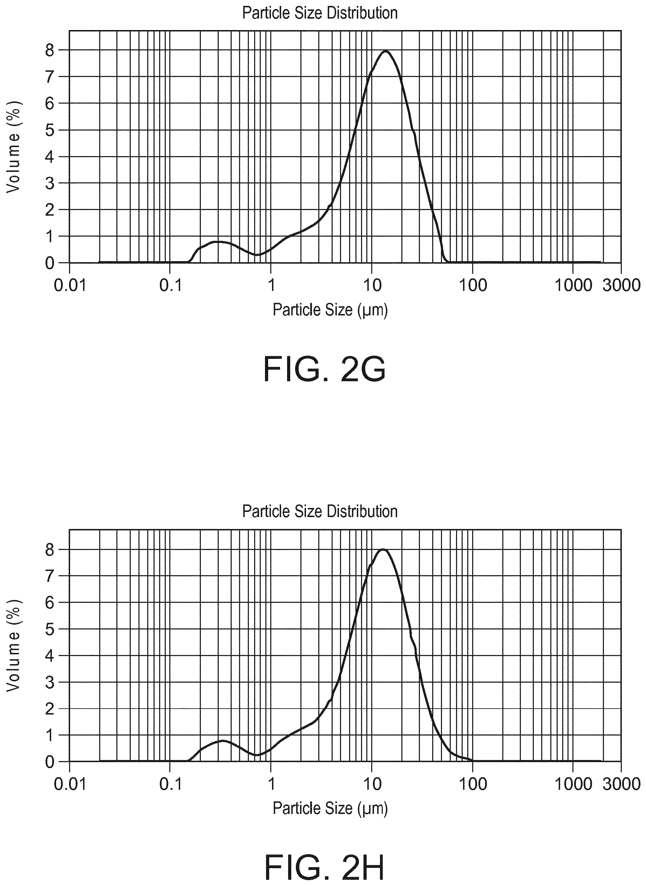

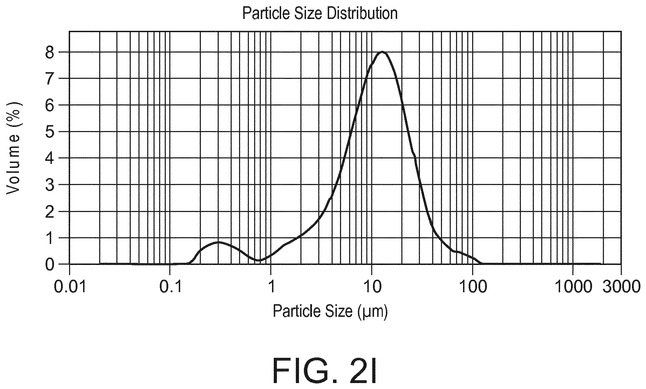

Figure 2 shows particle size distributions of low fat cream of Samples 10 to 17 of the invention and of Reference 2 (prior art): A: Reference 2 produced with no pH adjustment and UHT processed at 143°C for 8 seconds; B: Sample 10 produced with adjustment of the pH to 6.4 and UHT processed at 143°C for 8 seconds; C: Sample 11 produced with adjustment of the pH to 6.4 and UHT processed at 148°C for 8 seconds; D: Sample 12 produced with adjustment of the pH to 6.2 and UHT processed at 143°C for 8 seconds; E: Sample 13 produced with adjustment of the pH to 6.2 and UHT processed at 148°C for 8 seconds; F: Sample 14 produced with adjustment of the pH to pH 6.2 and UHT processed at 153°C for 8 seconds; G: Sample 15 produced with adjustment of the pH to 6 and UHT processed at 143°C for 8 seconds; H: Sample 16, produced with adjustment of the pH to 6 and UHT processed at 148°C; I: Sample 17, produced with adjustment of the pH to 6 and UHT treated at 153°C for 8 seconds. All Samples of the present invention have a significantly larger particles than the prior art Reference.

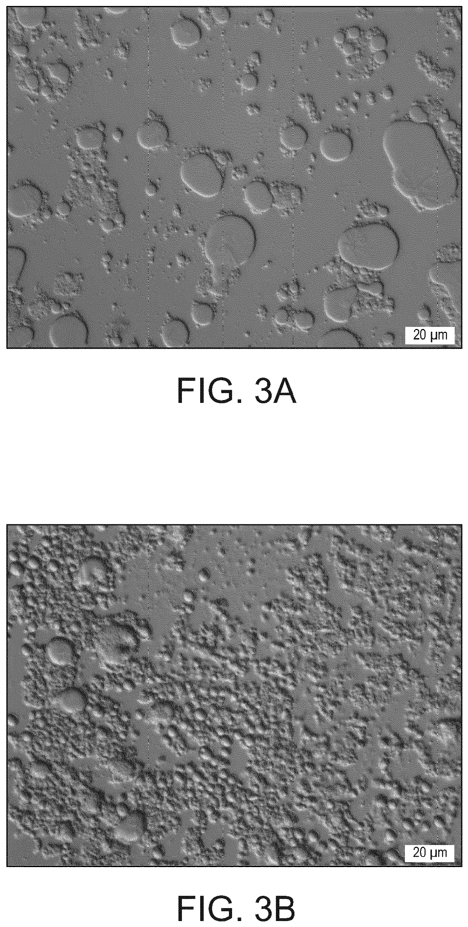

Figure 3 shows a microscopic image of the cream of Sample 2 (18wt% fat) in differential interference contrast (DIC) mode. Sample 2 of present invention shows controlled aggregate formation which is a microscopy signature of protein complex formation at molecular scale. Scale bar is 20 microns.

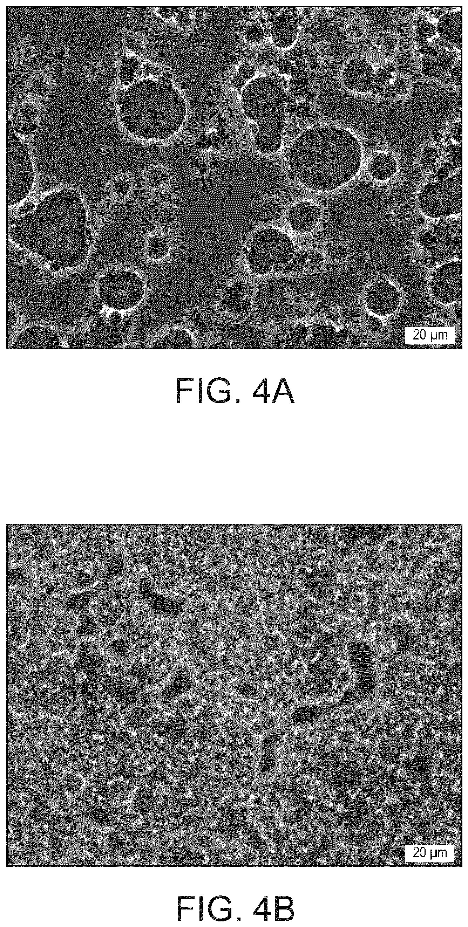

Figure 4 shows a microscopic image of the cream of Sample 2 (18wt% fat, produced with adjustment of the pH to 6.3 and UHT processed at 148°C for 8 seconds) in photoconductive (PC) mode. Sample 2 of present invention shows controlled aggregate formation which is a microscopy signature of protein complex formation at molecular scale. Scale bar is 20 microns.

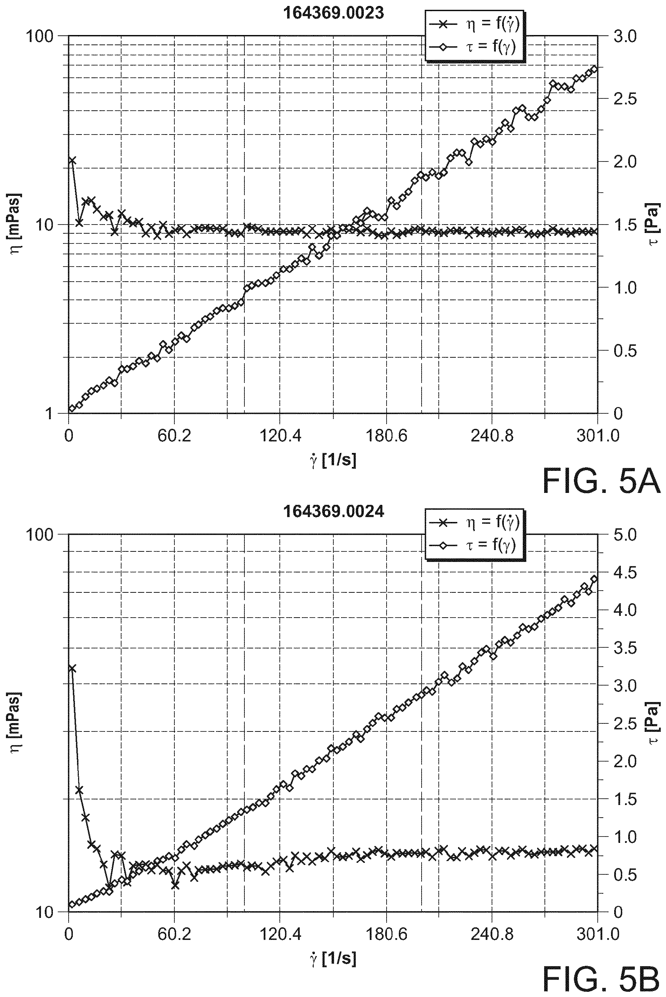

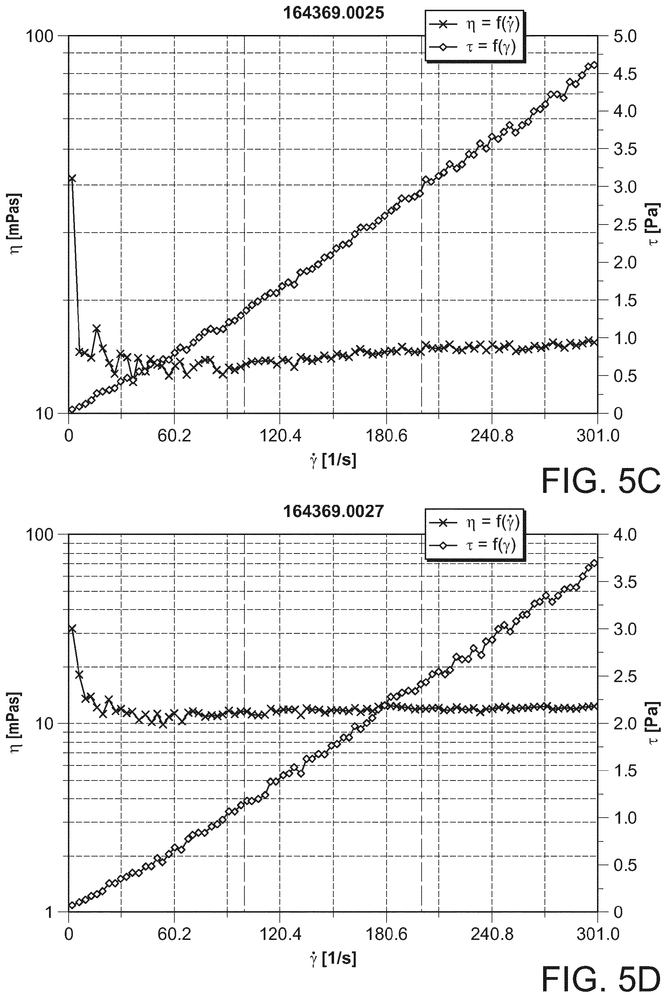

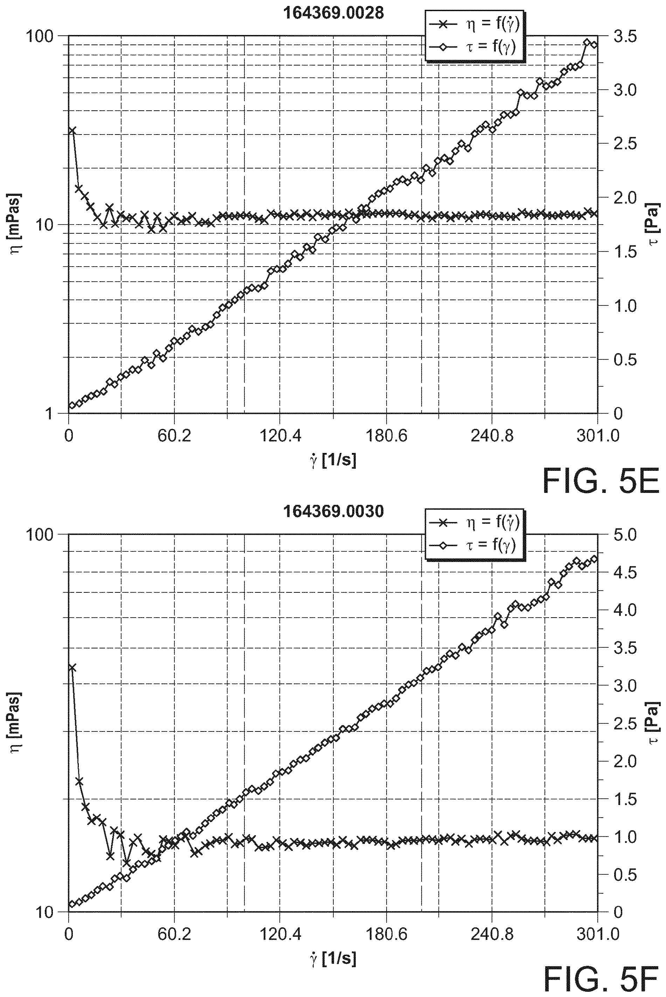

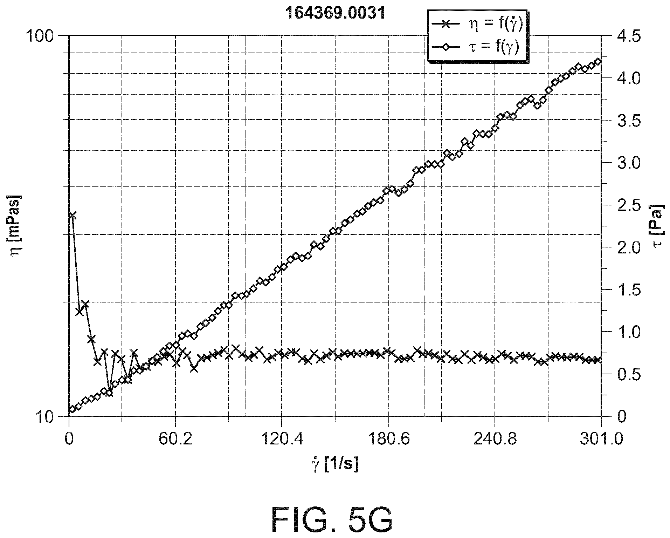

Figure 5 shows flow curves obtained on creams of Reference 2 (prior art) and Samples 10 to 13, 15 and 16 (invention): A: Reference 2 produced with no pH adjustment and UHT processed at 143°C for 8 seconds; B: Sample 10 produced with adjustment of the pH to 6.4 and UHT processed at 143°C for 8 seconds; C: Sample 11 produced with adjustment of the pH to 6.4 and UHT processed at 148°C for 8 seconds; D: Sample 12 produced with adjustment of the pH to 6.2 and UHT processed at 143°C for 8 seconds; E: Sample 13 produced with adjustment of the pH to 6.2 and UHT processed at 148°C for 8 seconds; F: Sample 15 produced with adjustment of the pH to pH 6 and UHT processed at 143°C for 8 seconds; G: Sample 16 produced with adjustment of the pH to 6 and UHT processed at 148°C for 8 seconds.

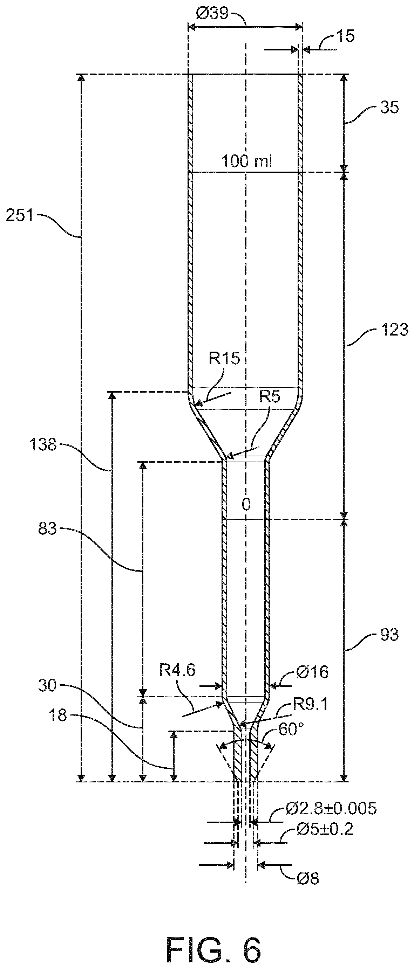

Figure 6 shows a drawing of a viscometer suitable to the measurement of the flowtime of an evaporated milk. Dimensions are indicated in millimeters.

### Detailed description

### Definitions

The term "caseins/whey protein aggregates having a volume based mean diameter value d_{(4,3)}" of a particular value refers to protein network comprising casein micelles and whey proteins either present in aggregates or covalently associated and having such volume mean diameter d_{(4,3)}., as measured using laser diffraction. For example the volume mean diameter d_{(4,3)} can be measured using a Malvern Mastersizer 2000 granulometer (Malvern Instruments Ltd, UK). In a preferred embodiment, dispersion the cream is achieved in distilled or deionised water and measurements of the particle size distribution by laser diffraction using a Malvern Mastersizer 2000 granulometer (Malvern Instruments Ltd, UK). Even more preferably, measurement settings used are a refractive index of 1.46 for fat droplets and 1.33 for water at absorption of 0.01 and samples are measured at an obscuration rate of 2.0 - 2.5%. The measurement results are preferably calculated in the Malvern software based on the Mie theory.

The term "cream" for the purpose of the present invention has its usual meaning in the art. All types of creams are encompassed, such as low fat, medium fat and full fat creams. The term "cream" refers herein to cream as such or with added thickeners and/or stabilizers. For the purpose of the present invention a cream typically has a fat content of 10 to 50 wt%, preferably 14-40wt% and most preferably 16-30wt%, based on the total weight of the cream. Typical protein content is of 1 to 4wt%, based on the total weight of the cream.

For the purpose of the present invention the terms "flowtime" refer to the time required for 100 ml of a cream to flow through a glass efflux viscosimeter as depicted in Figure 6, at 20°C. Such device consists of a glass cylinder with two guide marks, delimiting 100ml. The lower end is a calibrated capillary tube. Such a viscosimeter can be ordered from diverse suppliers, for example from Gerber instruments AG, Im Langhang 12, 8307 Effretikon, Switzerland.

### Cream

The present invention relates to a cream comprising caseins and whey proteins in the ratio of 90:10 to 60:40, wherein the caseins/whey protein aggregates have a volume-based mean diameter value d_{(4,3)} of 5 to 30µm as measured by laser diffraction.

The casein and whey ratio of 90:10 to 60:40 encompasses cream with a slight modification of the casein whey content, as well as natural cream. The casein and whey ratio can be modified by adding whey or casein to natural cream. In a preferred embodiment, the cream has the natural casein and whey ratio of cream from bovine origin, which is of 80:20.

The cream of the present invention comprises casein-whey protein aggregates having a specific volume-based mean diameter d_{(4,3)} that provides improved viscosity and mouthfeel to the cream, while avoiding phase separation in the cream. It is preferred that the casein-whey protein aggregates have a volume-based mean diameter d_{(4,3)} of at least 6, 7, 8, 10, 11, 12, 13, 14 or 15µm. In another embodiment, the volume-based mean diameter d_{(4,3)} of the casein-whey protein aggregates is of at most 25, 20, 15 or 10µm. In another embodiment the volume-based mean diameter d_{(4,3)} of the casein-whey protein aggregates ranges from 6 to 30µm, from 6 to 20µm, from 6 to 15µm or from 6 to 10µm. Protein aggregates having a size comprised in the above mentioned ranges have the advantage of providing improved texture/mouthfeel to the cream while being stable, i.e they do not sediment in the cream. In particular, the fat-like perception of the cream is improved by the presence of particles in the above-mentioned ranges. Controlled aggregation with particles in the above mentioned ranges is also advantageous in that it is at the fine balance between thicker texture/mouthfeel and avoidance of excessive sandiness.

The viscosity of the cream of the present invention varies depending mainly on the fat content and the presence or absence of thickeners. In particular the viscosity of a full fat cream of the invention is higher than the viscosity of a low or medium fat cream of the invention. However, irrespective of the type of cream, the cream of the present invention has a higher viscosity than a cream of same composition that has not been subjected to the process of the present invention and thus not having casein-whey protein aggregates with a volume-based mean diameter d_{(4,3)} in the above-described ranges. For example, in the case of a low fat cream without thickener, the viscosity of the cream of the present invention is typically of 10 to 25 mPas, preferably 10 to 20 mPas, at a shear rate of 100s⁻¹, whereas a cream of same fat and thickener content not subjected to the process of the invention would have a viscosity around 9 mPas at a shear rate of 100 s⁻¹.

In an embodiment of the invention, the cream has a viscosity of at least 10 mPas at a shear rate of 100 s⁻¹, for example 10 to 1000 mPas, 10 to 500 mPas, 10 to 400 mPas, 10 to 300 mPas or 10 to 250mPas. The viscosity can be measured using any kind of rheometer, for example using a plate-plate system (such as for example a Haake ReheoStress 6000, optionally coupled with a temperature controller (such as for example an UMTC - TM-PE-P).

The texture of a cream can be advantageously characterized by the time that the cream requires to flow through a calibrated viscometer as depicted in Figure 6 (herein designated as "flowtime"). The flowtime varies depending on the fat and total solids content of the cream. However, at constant fat and total solids content, the flowtime of the cream of the present invention is higher than the flowtime of a cream not subjected to the process of the present invention and thus not having casein-whey protein aggregates with a volume-based mean diameter d_{(4,3)} in the above-described ranges. Preferably, a cream of the present invention has a flowtime of at least 45s, at least 100s or at least 200s. In order to retain adequate flowability, it is preferred that the cream has flowtime of at most 500s, 400s, or 300s. For example it is of 50 to 500s, 100 to 400s or 200 to 300s. In an embodiment where the cream of the invention is a low fat cream with a thickener, the flowtime is preferably of at least 100 to 400s, more preferably 200 to 300s.

The flowtime is preferably measured as follows. It is first assessed that the product is perfectly liquid. If the product contains solid insoluble particles, the sample is sifted. The sample is then placed in a bath set a 20°C and brought to this temperature. The viscometer is fixed in a vertical position. The lower end of the viscometer is sealed, for example by applying a finger on the lower end, the viscometer is filled with the sample at 20°C up to above the 100 ml guide mark. The lower end is then un-sealed. The chronometer is started when the upper surface of the sample passes the 100ml mark and stopped when this surface passes the 0 ml mark. The flowtime is measured in a viscometer as represented in Figure 6, which is for example available from Gerber instruments AG, Im Langhang 12, 8307 Effretikon, Switzerland.

### Process

The invention relates to a process according to claim 4 for preparing a cream comprising the steps of:
a) providing a liquid cream at a temperature below 25°C, said cream comprising caseins and whey proteins in the ratio of 90:10 to 60:40;
b) adjusting pH of the cream provided in step a) in the range of 5.7 to 6.4;
c) subjecting the cream obtained in step b) to a UHT sterilization treatment at a temperature of between 135 °C to 155 °C.
d) cooling the cream obtained in step c) below 70° C.

The cream obtained by the process of the invention is advantageously characterized by the presence of larger protein particles and an increased viscosity, the whey protein forming covalent aggregates with the casein micelles.

In step a), the temperature is advantageously set to a temperature below 25°C so as to avoid the occurrence of acid induced casein precipitation/coagulation before the heat sterilization step c). Thus the controlled protein aggregation happens under the specific conditions of the heat sterilization treatment step c). For the same reason, a heating step is also preferably avoided between the pH adjustment and the heat sterilization step. Thus, in a preferred embodiment the cream is not subjected to a heat treatment step between the pH adjustment step b) and the sterilization step c).

In step b), the pH is preferably adjusted to a pH in the range of 5.9 to 6.4, more preferably 6 to 6.4, even more preferably 6.2 to 6.4, most preferably 6.2 to 6.3. Setting the pH to a value above 6, preferably above 6.2 is advantageous in that the desired particle size is obtained while keeping a "crème fraiche" flavor note. An acidic flavor note appears when decreasing the pH, which may not be desirable in some applications.

The pH can be adjusted using any kind of edible acid known to the person skilled in the art. Example of such acids are for example citric acid, lactic acid or phosphoric acid. The amount of acid needed to achieve the desired pH adjustment as described above can also be determined by a skilled person on the basis of his general knowledge.

The aggregation of the whey and casein proteins is achieved through a heat sterilization treatment.

The temperatures of 135 °C to 155 °C used in a heat sterilization treatment, which are needed to achieve proper spores inactivation, proved adequate to achieve controlled aggregation in creams without forming too large aggregates that would phase separate, while providing desired textural change. Such high temperatures advantageously achieve at the same time the safety of the cream through sterilization and the agglomeration of the whey and casein proteins, thus increasing the viscosity of the cream and improving its texture and/or mouthfeel.

The heat sterilization treatment carried out in step c) is a UHT sterilization process. UHT sterilization process is preferred because, due to the relatively high viscosity of the product, agitation of the product improves the heat transfer in the product, whereas retorting is an in-container sterilization method, in which there is no agitation. UHT sterilization process has been identified as providing better sterilization efficiency, as well as efficient protein aggregation and viscosity/mouthfeel improvement.

The UHT sterilization process is carried out at a temperature of 135 to 150°C, for example of 140 to 155°C, 143 to 155°C, 143 to 150°C or 143 to 148°C. Preferably, the UHT sterilization process time is comprised between 2 and 30 s, longer times being typically used for lower temperatures and shorter times for higher temperatures. For example, the UHT sterilization process can be carried out at 143°C for 8 seconds or at 148°C for 8 seconds. Selection of a temperature in the specific ranges described above is advantageous in that controlled aggregation is achieved, leading to the desired size of the protein aggregates as described above, thus leading to improved texture/mouthfeel of the cream. In addition, selection of a particular temperature for the UHT sterilization process may also impact the flavor of the cream. For example the use of high temperatures may lead to more cooked flavor notes, whereas lower temperatures may lead to more "crème-fraiche" flavor. Within the above ranges, the selection of the temperature may thus also be fine-tuned based on the desired flavor, depending on the intended use of the cream.

In a particular embodiment of the invention, the pH in step b) is adjusted to a pH in the range of 6 to 6.4 and in step c) a UHT sterilization process at 143°C for 8 seconds is carried out. In another particular embodiment of the invention, the pH in step b) is adjusted to a pH in the range of 6.2 to 6.4 and in step c) a UHT sterilization process at 143°C for 8 seconds is carried out. In another particular embodiment of the invention, the pH in step b) is adjusted to a pH in the range of 6 to 6.4 and in step c) a UHT sterilization process at 148°C for 8 seconds is carried out. In another particular embedment of the invention, the pH in step b) is adjusted to a pH in the range of 6.2 to 6.4 and in step c) a UHT treatment at 148°C for 8 seconds is carried out. In another particular embodiment of the invention, the pH in step b) is adjusted to a pH in the range of 6 to 6.4 and in step c) a UHT treatment at 153°C for 8 seconds is carried out. In another particular embedment of the invention, the pH in step b) is adjusted to a pH in the range of 6.2 to 6.4 and in step c) a UHT treatment at 153°C for 8 seconds is carried out.

The UHT sterilization process may be carried out using direct steam injection (DSI) or using indirect heating. Preferably it is carried by direct stream injection.

In step d), the cream is cooled to a temperature below 70°C to stop the agglomeration process. Preferably, the cream is cooled down to a temperature below 60°C. The temperature can be reduced to even lower values in order to allow for filling, such as aseptic filling of the liquid cream. Thus the cream can advantageously be cooled down to below 50°C, below 40°C, below 30°C, or even 20°C or below.

In a further step, the cream may thus be filled in a container, preferably aseptically filled in an appropriate packaging, such as, for example in bricks (such as those from Tetrapack), cans or in plastic bottles.

Optionally, the cream may also be further processed. For example it may be diluted, concentrated or dried.

The process described above is a process for preparing a cream comprising caseins and whey proteins in the ratio of 90:10 to 60:40, wherein the caseins/whey protein aggregates may have a volume-based mean diameter d_{(4,3)} of 5 to 30µm as measured by laser diffraction. More preferably the process is a process for preparing a cream as defined in any of the embodiments described in the section entitled "cream".

It has surprisingly been found that texture and mouthfeel of creams are enhanced as a result of the optimized process of the invention, in which the sterilization process ensures the safety of the cream and, combined with specific acidic conditions, causes controlled protein aggregation and consequently improved texture and mouthfeel of the cream.

These protein aggregates form a network that is suspected of binding water and entrapping fat globules (in case of presence of fat) and increases mix viscosity to create a uniquely smooth, creamy texture.

In one embodiment of the present invention, the cream does not include any thickeners and/or stabilisers. Examples of such thickeners include hydrocolloids, e.g. gums, carrageenans or pectins as well as food grade starches or maltodextrins.

### Product-by-process

The process of the invention, as described above, leads to a cream having caseins/whey protein aggregates of unique structure providing enhanced viscosity, texture and/or mouthfeel compared to a cream of similar composition, which has not been subjected to the process of the present invention.

### Products

The present disclosure also relates to a food or beverage product comprising the cream of the present invention. Such food or beverage product may be selected from a ready-to-drink beverage, a dairy culinary product, a soup or soup base, a dessert, a whipping cream, a tea or coffee creamer or enhancer, a dairy component in coffee mixes and dairy component for use in a beverage system such as a beverage vending system.

Ready-to-drink beverages can for example be selected from ready-to-drink creams, cocoa and/or malt beverages and ready-to-drink coffee, tea or chocolate beverages comprising a dairy component. A dairy culinary product may be selected from dairy culinary savoury sauce, a baking aid and a savoury or sweet cooking aid. For its incorporation in the food or beverage product, the cream may be simply admixed with further solid or liquid ingredients or further transformed such as for example be diluted, concentrated, dried or in any other way processed.

In other words, the invention relates to the use of a cream of the present invention for producing a food or beverage product, preferably as described in any of the above embodiments.

### Examples

### Example 1: preparation of Reference 1 and Samples 1 to 17

### Preparation of Reference 1

Low fat cream (protein (Nx2.8%) 3.4%, fat 18%, total solids 25%) was produced by admixing skim milk, anhydrous milk fat and lactose for 30 minutes. The cream was then homogenized at 150 bar and then cooled by a plate heat exchanger to 5°C and pH of homogenized liquid cream was measured to be 6.7. The composition was then subjected to a UHT sterilization process by direct steam injection (DSI) at 143°C for 8 seconds. After the heat treatment, the cream was subjected to flash cooling at 78°C and then the product was cooled down to 20°C with a plate exchanger. Finally the product was aseptically filled in plastic bottles.

### Preparation of Reference 2

Low fat cream (protein (Nx2.8%) 3.4%, fat 18%, total solids 25%) was produced by admixing skim milk, anhydrous milk fat and lactose for 30 minutes. The cream was then pasteurized (70°C for 30s), then homogenized at 150 bar and then cooled by a plate heat exchanger to 5°C and pH of homogenized liquid cream was measured to be 6.7. The composition was then subjected to a UHT sterilization process by direct steam injection (DSI) at 143°C for 8 seconds. After the heat treatment, the cream was subjected to flash cooling at 78°C and then the product was cooled down to 20°C with a plate exchanger. Finally the product was aseptically filled in plastic bottles.

### Preparation of Samples 1 to 9 made according to the process of the present invention

Low fat cream (protein (Nx2.8%) 3.4%, fat 18%, total solids 25%) was produced by admixing skim milk, anhydrous milk fat and lactose for 30 minutes. The cream was then homogenized at 150 bar and then cooled by a plate heat exchanger to 5°C. The pH was adjusted to specific values as recited in Table 1 below. The pH adjustment was carried out in batch with phosphoric acid and controlled by a Mettler Toledo Seven Compact pH meter. The composition was then subjected to a UHT sterilization process by direct steam injection (DSI) at 143°C for 8 seconds. After the heat treatment, the cream was subjected to flash cooling at 78°C and then the product was cooled down to 20°C with a plate exchanger. Finally the product was aseptically filled in plastic bottles.

### Preparation of Samples 10 to 17 made according to the process of the present invention

Low fat cream (protein (Nx2.8%) 3.4%, fat 18%, total solids 25%) was produced by admixing skim milk, anhydrous milk fat and lactose for 30 minutes. The cream was then pasteurized (70°C for 30s), then homogenized at 150 bar and then cooled by a plate heat exchanger to 5°C. The pH was adjusted to specific values as recited in Table 1 below. The pH adjustment was carried out in batch with phosphoric acid and controlled by a Mettler Toledo Seven Compact pH meter. The composition was then subjected to a UHT sterilization process by direct steam injection (DSI) at 143°C for 8 seconds. After the heat treatment, the cream was subjected to flash cooling at 78°C and then the product was cooled down to 20°C with a plate exchanger. Finally the product was aseptically filled in plastic bottles.

**Table 1: pH and UHT processing conditions applied to samples 1 to 17**

| Sample # | pH | UHT treatment temperature [°C] | UHT treatment time [s] | Pasteurization before pH adjustment |
|---|---|---|---|---|
| 1 | 6.3 | 143 | 5 | |
| 2 | 6.3 | 148 | 5 | |
| 3 | 6.3 | 153 | 5 | |
| 4 | 6.2 | 143 | 5 | |
| 5 | 6.2 | 148 | 5 | |
| 6 | 6.2 | 153 | 5 | |
| 7 | 6.0 | 143 | 5 | |
| 8 | 6.0 | 148 | 5 | |
| 9 | 6.0 | 153 | 5 | |
| 10 | 6.4 | 143 | 5 | |
| 11 | 6.4 | 148 | 5 | |
| 12 | 6.2 | 143 | 5 | |
| 13 | 6.2 | 148 | 5 | |
| 14 | 6.2 | 153 | 5 | |
| 15 | 6.0 | 143 | 5 | |
| 16 | 6.0 | 148 | 5 | |
| 17 | 6.0 | 153 | 5 | |

### Example 2: Analysis of Reference 1 and Samples 1 to 17

### Protein aggregates particle size distribution in References 1 and 2 and Samples 1 to 17

The creams of Samples 1 to 17 were compared to References 1 and 2 and were characterized by laser diffraction in order to determine particle size distribution (PSD = Particle Size Distribution)

The particle size of the protein aggregates, expressed in micrometers (µm) was measured using Malvern Mastersizer 2000 granulometer (laser diffraction unit, Malvern Instruments, Ltd., UK). Ultra pure and gas free water was prepared using Honeywell water pressure reducer (maximum deionised water pressure: 1 bar) and ERMA water degasser (to reduce the dissolved air in the deionised water).

Dispersion of the cream was achieved in distilled or deionised water and measurements of the particle size distribution by laser diffraction.

Measurement settings used are a refractive index of 1.46 for fat droplets and 1.33 for water at absorption of 0.01. All samples were measured at an obscuration rate of 2.0 - 2.5%.

The measurement results are calculated in the Malvern software based on the Mie theory. The results are presented in Table 1.

**Table 1: Volume-based mean diameter d_{(4,3)} determined by laser granulometry for Samples 1 to 9 of the present invention and Reference 1**

| **Sample #** | **d_{(4,3)} (µm)** |
|---|---|
| Reference 1 | 4.7 |
| Sample 1 | 8.2 |
| Sample 2 | 7.3 |
| Sample 3 | 7.1 |
| Sample 4 | 11.0 |
| Sample 5 | 10.8 |
| Sample 6 | 10.4 |
| Sample 7 | 15.3 |
| Sample 8 | 13.9 |
| Sample 9 | 13.7 |

**Table 2: Volume-based mean diameter d_{(4,3)} determined by laser granulometry for Samples 10 to 17 of the present invention and Reference 2**

| **Sample** # | **d_{(4,3)} (µm)** |
|---|---|
| Reference 2 | 4.4 |
| Sample 10 | 7.6 |
| Sample 11 | 7.8 |
| Sample 12 | 9.6 |
| Sample 13 | 9.4 |
| Sample 14 | 8.9 |
| Sample 15 | 13.5 |
| Sample 16 | 13.5 |
| Sample 17 | 14.0 |

The PSD profiles of Samples 1 to 9 and of Reference 1 are provided in Figure 1:
- Figure 1A: Reference 1
- Figure 1B: Sample 1
- Figure 1C: Sample 2
- Figure 1D: Sample 3
- Figure 1E: Sample 4
- Figure 1F: Sample 5
- Figure 1G: Sample 6
- Figure 1H: Sample 7
- Figure 1I: Sample 8
- Figure 1J: Sample 9

The PSD Profiles of Samples 10 to 17 and of Reference 2 are provided in Figure 2:
- Figure 2A: Reference 2
- Figure 2B: Sample 10
- Figure 2C: Sample 11
- Figure 2D: Sample 12
- Figure 2E: Sample 13
- Figure 2F: Sample 14
- Figure 2G: Sample 15
- Figure 2H: Sample 16
- Figure 2I: Sample 17

### Microstructure of the creams

The microstructure of the systems was investigated directly in liquid creams using light microscopy.

For investigation of liquid samples, a Leica DMR light microscope coupled with a Leica DFC 495 camera was used. The systems were observed using the differential interference contrast (DIC) mode. An aliquot of 500 microliters of the sample (Sample 2 and Reference 1) was deposited on a glass slide and covered with a clover slide before observation under the microscope. A picture was taken, which is provided in Figure 3:
- Figure 3A: Reference 1
- Figure 3B: Sample 2

The same procedure was followed to assess the cream structure using microscopy in PC mode. Pictures were taken, which are provided in Figure 4:
- Figure 4A: Reference 1
- Figure 4B: Sample 2

In both modes, large protein aggregates are visible on pictures or Sample 2, whereas they are absent from Reference 1. Such aggregates appear as the structural signature of the cream of the present invention. They are responsible for a change of perception of the product texture by the consumer, and namely for a significant mouthfeel improvement.

### Flow behavior of Samples 1 to 6 and of Reference 1

Samples according to the invention and a reference were characterized for their flow using a Haake RheoStress 6000 rheometer coupled with temperature controller UMTC - TM-PE-P regulating to 20+/-0.1°C. The measuring geometry was a plate-plate system with a 60 mm diameter and a measuring gap of 1 mm.

The flow curve was obtained by applying a controlled shear stress to a 3 mL sample in order to cover a shear rate range between 0 and 300 1/s (controlled rate linear increase) in 180 seconds.

The graphs are provided in Figure 5:
- Figure 5A: Reference 2
- Figure 5B: Sample 10
- Figure 5C: Sample 11
- Figure 5D: Sample 12
- Figure 5E: Sample 13
- Figure 5F: Sample 15
- Figure 5G: Sample 16

The shear viscosity of the samples and of the reference at 25°C and at a shear rate of 100 s⁻¹ is provided in Table 2 below. As can be seen from those results, the viscosity is significantly improved in the Samples 1 to 6 of the invention than in the cream of the reference.

**Table 2: Rheological properties of Samples 1 to 6 and of Reference 1.**

| **Sample** | **Shear viscosity [mPa.s]** |
|---|---|
| Reference 2 | 9.4 |
| Sample 10 | 13.4 |
| Sample 11 | 13.4 |
| Sample 12 | 11.7 |
| Sample 13 | 11.2 |
| Sample 15 | 15.5 |
| Sample 16 | 14.4 |

This data shows that the viscosity is increased for the cream of the present invention (Samples 10 to 13, 15 and 16) compared to the standard cream of the Reference 2.

The physical properties of the samples of the present invention are associated with a significant change in texture and with an improved mouthfeel.

## Claims

1. A cream comprising caseins and whey proteins in the ratio of 90:10 to 60:40, wherein the caseins/whey protein aggregates have a volume-based mean diameter d_{(4,3)} of 5-30µm as measured by laser diffraction with a refractive index of 1.46 for fat droplets and 1.33 for water at absorption of 0.01 and an obscuration rate of 2.0 - 2.5%, wherein the cream has a fat content of 10 to 50wt% and a protein content of 1 to 4 %, based on the total weight of the cream and wherein said cream has a pH in the range of 5.7 to 6.4.

2. The cream according to claim 1, which does not comprise a thickener.

3. The cream according to any of claims 1 to 2, wherein the cream is a low fat cream, preferably with a fat content below 20wt%, based on the total weight of the cream.

4. A process for preparing a cream comprising the steps of:
a) providing a liquid cream at a temperature below 25°C, said cream comprising caseins and whey proteins in the ratio of 90:10 to 60:40, a fat content of 10 to 50wt% and a protein content of 1 to 4 %, based on the total weight of the liquid cream;
b) adjusting the pH of the cream provided in step a) in the range of 5.7 to 6.4;
c) subjecting the cream obtained in step b) to a heat sterilization treatment at a temperature above 100°C; wherein the heat sterilization treatment is a UHT sterilization process carried out at a temperature of 135 to 155°C,
d) cooling the cream obtained in step c) below 70° C.

5. The process according to claim 4, wherein in step b) the pH of the cream is adjusted to a pH in the range of 5.9 to 6.4.

6. The process according to claim 4 or 5, wherein the UHT sterilization process time is of 2 to 30s.

7. The process according to any one of claims 4 to 6, wherein the cream is not subjected to a heat treatment step between the pH adjustment step b) and the sterilization step c).

8. Use of the cream according to any one of claims 1 to 3 for producing a food or beverage product.

## Patentansprüche

1. Sahne, umfassend Caseine und Molkenproteine in dem Verhältnis von 90 : 10 bis 60 : 40, wobei die Casein/Molkenprotein-Aggregate einen volumenbasierten mittleren Durchmesser d_{(4,3)} von 5-30 µm aufweisen, gemessen durch Laserbeugung mit einem Brechungsindex von 1,46 für Fetttröpfchen und 1,33 für Wasser bei einer Absorption von 0,01 und einer Verschleierungsrate von 2,0 - 2,5 %, wobei die Sahne einen Fettgehalt von 10 bis 50 Gew.-% und einen Proteingehalt von 1 bis 4 % aufweist, bezogen auf das Gesamtgewicht der Sahne, und wobei die Sahne einen pH-Wert in dem Bereich von 5,7 bis 6,4 aufweist.

2. Sahne nach Anspruch 1, die kein Verdickungsmittel umfasst.

3. Sahne nach einem der Ansprüche 1 bis 2, wobei die Sahne eine fettarme Sahne ist, vorzugsweise mit einem Fettgehalt unter 20 Gew.-%, bezogen auf das Gesamtgewicht der Sahne.

4. Prozess zum Zubereiten einer Sahne, umfassend Schritte:
a) Bereitstellen einer flüssigen Sahne bei einer Temperatur unter 25 °C, die Sahne umfassend Caseine und Molkenproteine in dem Verhältnis von 90 : 10 bis 60 : 40, einen Fettgehalt von 10 bis 50 Gew.-% und einen Proteingehalt von 1 bis 4 %, bezogen auf das Gesamtgewicht der flüssigen Sahne;
b) Einstellen des pH-Werts der in Schritt a) bereitgestellten Sahne in dem Bereich von 5,7 bis 6,4;
c) Unterziehen der in Schritt b) erhaltenen Sahne einer Wärmesterilisationsbehandlung bei einer Temperatur über 100 °C; wobei die Wärmesterilisationsbehandlung ein UHT-Sterilisationsprozess ist, der bei einer Temperatur von 135 bis 155 °C durchgeführt wird,
d) Kühlen der in Schritt c) erhaltenen Sahne unter 70 °C.

5. Prozess nach Anspruch 4, wobei in Schritt b) der pH-Wert der Sahne auf einen pH-Wert in dem Bereich von 5,9 bis 6,4 eingestellt wird.

6. Prozess nach Anspruch 4 oder 5,
wobei die UHT-Sterilisations-Prozesszeit 2 bis 30 s beträgt.

7. Prozess nach einem der Ansprüche 4 bis 6, wobei die Sahne zwischen dem pH-Einstellungsschritt b) und dem Sterilisationsschritt c) keiner Wärmebehandlung unterzogen wird.

8. Verwendung der Sahne nach einem der Ansprüche 1 bis 3 zum Produzieren eines Lebensmittel- oder Getränkeprodukts.

## Revendications

1. Crème comprenant des caséines et des protéines de lactosérum dans le rapport de 90:10 à 60:40, dans laquelle les agrégats de caséines/protéines de lactosérum ont un diamètre moyen basé sur le volume d_{(4,3)} de 5 à 30 µm, tel que mesuré par diffraction laser avec un indice de réfraction de 1,46 pour les gouttelettes de graisse et de 1,33 pour l'eau à une absorption de 0,01 et un taux d'obscurcissement de 2,0 à 2,5 %, dans laquelle la crème a une teneur en matière grasse de 10 à 50 % en poids et une teneur en protéines de 1 à 4 %, sur la base du poids total de la crème et dans laquelle ladite crème a un pH dans la plage de 5,7 à 6,4.

2. Crème selon la revendication 1, qui ne comprend pas d'épaississant.

3. Crème selon l'une quelconque des revendications 1 à 2, dans laquelle la crème est une crème pauvre en matière grasse, de préférence avec une teneur en matière grasse inférieure à 20 % en poids, sur la base du poids total de la crème.

4. Procédé de préparation d'une crème comprenant les étapes consistant à :
a) fournir une crème liquide à une température inférieure à 25 °C, ladite crème comprenant des caséines et des protéines de lactosérum dans le rapport de 90:10 à 60:40, une teneur en matières grasses de 10 à 50 % en poids et une teneur en protéines de 1 à 4 %, sur la base du poids total de la crème liquide ;
b) ajuster le pH de la crème fournie à l'étape a) dans la plage de 5,7 à 6,4 ;
c) soumettre la crème obtenue à l'étape b) à un traitement de stérilisation thermique à une température supérieure à 100 °C ; dans lequel le traitement de stérilisation thermique est un procédé de stérilisation UHT effectué à une température comprise entre 135 et 155 °C,
d) refroidir la crème obtenue à l'étape c) en dessous de 70 °C.

5. Procédé selon la revendication 4, dans lequel, à l'étape b), le pH de la crème est ajusté à un pH compris dans la plage de 5,9 à 6,4.

6. Procédé selon la revendication 4 ou 5,
dans lequel le temps de traitement de stérilisation UHT est compris entre 2 et 30 s.

7. Procédé selon l'une quelconque des revendications 4 à 6, dans lequel la crème n'est pas soumise à une étape de traitement thermique entre l'étape d'ajustement du pH b) et l'étape de stérilisation c).

8. Utilisation d'une crème selon l'une quelconque des revendications 1 à 3 pour produire un produit alimentaire ou de boisson.
